# EUROPÄISCHE PATENTSCHRIFT

(11) **EP 1 640 258 B1**
(45) Veröffentlichungstag und Bekanntmachung des Hinweises auf die Patenterteilung: **24.03.2010**
(21) Anmeldenummer: 05015328.7
(22) Anmeldetag: 14.07.2005
(51) Int. Cl.: B62J 7/08, B62J 11/00

(54) **Halterung zur Befestigung eines Zubehörteils an einem Zweirad**
Fixing device for accessories in a two-wheel vehicle
Dispositif de fixation d'un accessoire

(30) Priorität: 24.09.2004 DE 102004046533
(43) Veröffentlichungstag der Anmeldung: 29.03.2006
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- DE-U1- 20 214 809
- DE-U1-202004 007 599

## Beschreibung

Die Erfindung betrifft eine Halterung mit einem Kloben und einer Klobenaufnahme zur Befestigung eines Zubehörteils, insbesondere eines Schlosses, an einem Zweirad.

Derartige Halterungen, die zur Befestigung von Schlössern, Taschen, Trinkflaschen, Beleuchtungseinrichtungen und anderen Zubehörteilen an einem Zweirad ausgelegt sind, sind in vielfacher Form bekannt. Kloben und Klobenaufnahme sind dabei nach Art einer Kupplung ausgebildet, die eine lösbare Verbindung zwischen dem Zubehörteil und dem Zweirad ermöglicht. Im zusammengesetzten, verriegelten Zustand der Halterung ist der Kloben in der Klobenaufnahme gesichert. Um die Freigabe des Klobens aus der Klobenaufnahme und damit das Lösen des Zubehörteils von dem Zweirad zu ermöglichen, ist üblicherweise zusätzlich ein Auslösemechanismus vorgesehen. Derartige Halterungen besitzen in der Regel einen relativ komplexen Aufbau und sind oftmals umständlich zu bedienen.

DE 20 2004 007 599 U1 beschreibt eine derartige Halterung. Die Klobenaufnahme umfasst einen Nutträger, in dem eine Einschubnut ausgebildet ist, in die ein als Einschubleiste ausgebildeter Kloben mit einer am Außenumfang ausgebildeten Einkerbung einführbar ist. Die Klobenaufnahme umfasst ferner einen Drehring, der den Nutträger umgreift und um eine Längsachse relativ zu dem Nutträger drehbar ist. Dem Drehring ist ein Rastzapfen zugeordnet, der mit dem Drehring verdrehbar ist und eine Seitenwandung der Einschubnut durchgreift. Bei in die Einschubnut eingesetzter Einschubleiste und in einer Verriegelungsstellung des Drehrings greift der Rastzapfen in die Einkerbung der Einschubleiste ein, um die Einschubleiste an dem Nutträger zu verriegeln. Wird der Drehring in eine Freigabestellung verstellt, wird der Rastzapfen aus der Einschubnut zurückgezogen, so dass die Einschubleiste aus der Einschubnut entnommen werden kann.

Es ist eine Aufgabe der Erfindung, eine Halterung für Zweiradzubehör zu schaffen, die einfach und kostengünstig herstellbar ist und zugleich eine einfache Betätigung gestattet.

Diese Aufgabe wird durch eine Halterung mit den Merkmalen des Anspruchs 1 gelöst, und insbesondere dadurch, dass die Klobenaufnahme eine Aufnahmeschale aufweist, die einen Aufnahmeraum zum Einführen des Klobens begrenzt und die mehrere insbesondere seitliche Eingriffsfenster aufweist, dass die Klobenaufnahme ferner einen Auslösering aufweist, der die Aufnahmeschale umgreift und um eine Längsachse der Aufnahmeschale zwischen einer Verriegelungsstellung und einer Freigabestellung relativ zu der Aufnahmeschale drehbar ist, wobei der Auslösering mehrere Hintergreifungsnasen aufweist, dass der Kloben entlang der Längsachse der Aufnahmeschale in den Aufnahmeraum der Aufnahmeschale einführbar ist, dass der Kloben mehrere radial abgesetzte Verriegelungsabschnitte aufweist, und dass der Kloben und die Klobenaufnahme dergestalt zusammenwirken, dass, wenn der Kloben in den Aufnahmeraum eingeführt ist,
- die Hintergreifungsnasen des Auslöserings durch die Eingriffsfenster der Aufnahmeschale in den Aufnahmeraum eingreifen und die Verriegelungsabschnitte des Klobens hintergreifen, um den Kloben an der Klobenaufnahme zu verriegeln, falls sich der Auslösering in der Verriegelungsstellung befindet, und
- die Hintergreifungsnasen aus dem Aufnahmeraum zurückgezogen sind, um den Kloben für eine Entnahme aus der Klobenaufnahme freizugeben, falls sich der Auslösering in der Freigabestellung befindet.

Die erfindungsgemäße Halterung zeichnet sich zunächst dadurch aus, dass die Klobenaufnahme eine Aufnahmeschale, in deren Aufnahmeraum der Kloben einführbar ist, und einen separat ausgebildeten Auslösering umfasst. Die Aufnahmeschale wird dabei von dem Auslösering umschlossen, der um die Längsachse der Aufnahmeschale und relativ zu dieser zwischen der Verriegelungsstellung und der Freigabestellung, d.h. zwischen einer den Kloben an der Klobenaufnahme verriegelnden und einer den Kloben für eine Entnahme aus der Klobenaufnahme freigebenden Funktionsstellung, drehbar ist. Der Auslösering kann mit einer Hand ähnlich dem Öffnen eines Schraubverschlusses betätigt werden, wobei durch die erfindungsgemäße Ringform der Auslösering rundum zugänglich ist und somit an verschiedenen Stellen durch den Benutzer gegriffen und betätigt werden kann.

In der Verriegelungsstellung greifen die Hintergreifungsnasen des Auslöserings durch die in der Aufnahmeschale ausgebildeten Eingriffsfenster in den Aufnahmeraum der Aufnahmeschale ein. Bei in die Klobenaufnahme eingesetztem Kloben hintergreifen die Hintergreifungsnasen dabei die an dem Kloben ausgebildeten Verriegelungsabschnitte, die radial nach außen überstehen, so dass ein wirksames Verriegeln des Klobens an der Klobenaufnahme gewährleistet ist. Somit kann beispielsweise ein mit dem Kloben verbundenes Fahrradschloss sicher und unverlierbar am Rahmen eines Fahrrads, an dem dann die Klobenaufnahme montiert ist, befestigt werden. Prinzipiell kann das Zubehörteil aber auch mit der Klobenaufnahme verbunden und der Kloben an dem Fahrrad montiert sein.

In der Freigabestellung hingegen sind die Hintergreifungsnasen des Auslöserings aus dem Aufnahmeraum der Aufnahmeschale zurückgezogen, so dass die Verriegelungsabschnitte eines in den Aufnahmeraum eingeführten Klobens nicht mit den Hintergreifungsnasen verriegelt sind. Der Kloben kann in der Freigabestellung des Auslöserings aufgrund der fehlenden Verriegelung aus der Klobenaufnahme entnommen werden.

Die erfindungsgemäße Halterung kann besonders einfach und folglich auch besonders kostengünstig hergestellt werden. Erfindungsgemäß ist es nämlich möglich, dass für eine vollständige Ausbildung der Klobenaufnahme neben der Aufnahmeschale und dem Auslösering keine weiteren Bestandteile nötig sind. Die Aufnahmeschale und der Auslösering können unabhängig voneinander hergestellt und anschließend zu der gesamten Klobenaufnahme zusammengesetzt werden. Das Zusammensetzen kann insbesondere nach Art einer Schnappverbindung oder dergleichen ohne weitere Befestigungsmittel und somit auf besonders einfache Weise durchgeführt werden.

Vorteilhafte Ausführungsformen der Erfindung sind in den Unteransprüchen, der Beschreibung sowie der Zeichnung angegeben.

Der Auslösering und die Aufnahmeschale wirken bevorzugt dergestalt zusammen, dass die Hintergreifungsnasen durch eine Drehung des Auslöserings aus der Verriegelungsstellung in die Freigabestellung aus dem Aufnahmeraum zurückziehbar sind. Durch eine einfache Drehung des Auslöserings kann somit ein bis zu diesem Zeitpunkt in der Klobenaufnahme gesicherter Kloben entsichert werden, um die Entnahme des Klobens aus der Klobenaufnahme zu ermöglichen.

Weiterhin ist es von Vorteil, wenn die Aufnahmeschale mehrere Ablenkstege aufweist, die mit den Eingriffsfenstern alternierend in Umfangsrichtung der Aufnahmeschale angeordnet sind, um das Zurückziehen der Hintergreifungsnasen zu bewirken. In der Verriegelungsstellung ragen die Hintergreifungsnasen dann jeweils durch ein Eingriffsfenster zwischen zwei Ablenkstegen in den Aufnahmeraum der Aufnahmeschale hinein. Bei einer anschließenden Drehung des Auslöserings in Richtung der Freigabestellung relativ zu der Aufnahmeschale können die Hintergreifungsnasen aufgrund der "im Weg stehenden" Ablenkstege jedoch keine reine Drehbewegung ausführen, die Hintergreifungsnasen müssen vielmehr radial nach außen ausweichen. Somit kann mittels der zur Stabilisierung der Aufnahmeschale ohnehin vorzusehenden Ablenkstege zugleich auch das Zurückziehen der Eingriffsnasen aus dem Aufnahmeraum erreicht werden.

Vorzugsweise bildet jeder Ablenksteg eine seitliche Begrenzung eines zugeordneten Eingriffsfensters.

Nach einer bevorzugten Ausführungsform der Erfindung sind die Ablenkstege der Aufnahmeschale zusätzlich als Drehsicherung gegen eine Drehung des Klobens in der Klobenaufnahme um eine Längsachse des Klobens ausgebildet. Die Ablenkstege können somit neben der Funktion, das Zurückziehen der Hintergreifungsnasen zu bewirken, zugleich auch die zusätzliche Funktion erfüllen, eine oder mehrere vorbestimmte Winkelstellungen des Klobens relativ zu der Klobenaufnahme festzulegen.

Nach einer weiteren bevorzugten Ausführungsform der Erfindung weisen die Ablenkstege der Aufnahmeschale, die insbesondere parallel zu der Längsachse der Aufnahmeschale verlaufen, zum Zusammenwirken mit Führungsabschnitten des Klobens radial in Richtung der Längsachse der Aufnahmeschale ragende, d.h. nach innen ragende Vorsprünge auf. Hierdurch können die Ablenkstege zusätzlich zu ihren Funktionen als Eingriffsfensterbegrenzungen und Umlenkmittel für die Hintergreifungsnasen bei einer Drehung des Auslöserings auch als Positionierhilfe und Drehsicherung wirken. Zu diesem Zweck ist es bevorzugt, wenn die Vorsprünge oder Ablenkstege und die genannten Führungsabschnitte des Klobens formschlüssig zueinander ausgebildet sind.

Vorzugsweise sind die Vorsprünge zur Längsachse der Aufnahmeschale hin konvex gewölbt und/oder die Führungsabschnitte des Klobens als konkave Ausnehmungen ausgebildet. Grundsätzlich sind jedoch beliebig anders geformte Vorsprünge und hierzu komplementär ausgebildete Führungsabschnitte denkbar. Durch die konvexe Wölbung der Vorsprünge kann eine besonders hohe Stabilität der Ablenkstege und somit der gesamten Aufnahmeschale erreicht werden.

Es ist bevorzugt, wenn durch das Einführen des Klobens in den Aufnahmeraum der Aufnahmeschale die Verriegelungsabschnitte des Klobens an den Hintergreifungsnasen des Auslöserings verrastbar sind. Die Verriegelungsstellung der Halterung wird hierbei durch das Einführen des Klobens gewissermaßen automatisch erreicht, ohne dass weitere Maßnahmen wie eine Betätigung des Auslöserings oder eines sonstigen Mechanismus nötig wären. Hierdurch wird ermöglicht, dass das Einführen des Klobens in die Klobenaufnahme mit lediglich einer Hand durchführbar ist.

Weiterhin ist es bevorzugt, wenn die Hintergreifungsnasen des Auslöserings bezüglich der Längsachse der Aufnahmeschale radial rückfedernd ausgebildet sind. Hierdurch wird gewährleistet, dass beim Einführen des Klobens die Hintergreifungsnasen des Auslöserings zunächst aus dem Aufnahmeraum der Aufnahmeschale radial zurückweichen können, um bei in den Aufnahmeraum eingeführtem Kloben dann wieder in den Aufnahmeraum einzugreifen, so dass insgesamt ein Verrasten der Verriegelungsabschnitte des Klobens an den Hintergreifungsabschnitten des Auslöserings erfolgt. Es ist auch möglich, dass beim Einführen des Klobens in die Klobenaufnahme der radial rückfedernden Bewegung der Hintergreifungsnasen eine zumindest geringfügige tangentiale Ausweichbewegung der Hintergreifungsnasen überlagert ist, die ihrerseits wiederum mit einer entsprechenden kurzzeitigen Drehung des Auslöserings in Richtung der Freigabestellung einhergeht.

Vorzugsweise weisen die Verriegelungsabschnitte des Klobens und/oder die Hintergreifungsnasen des Auslöserings als Ablenkschrägen dienende Kontaktflächen auf, um das radiale Rückfedern der Hintergreifungsnasen zu bewirken. Durch diese Ablenkschrägen wird erreicht, dass beim Einführen des Klobens in die Klobenaufnahme die Hintergreifungsnasen mittels der Verriegelungsabschnitte aus dem Aufnahmeraum der Aufnahmeschale hinaus gedrängt werden.

Das radiale Rückfedern der Hintergreifungsnasen kann besonders einfach dadurch ermöglicht werden, dass die Hintergreifungsnasen an Federelementen, insbesondere S-förmigen Balkenfedern, ausgebildet sind. Als Balkenfedern ausgebildete Federelemente erstrecken sich dabei bevorzugt am Rand des Aufnahmeraums bezüglich der Längsachse der Klobenaufnahme in im Wesentlichen tangentialer Richtung.

Des Weiteren wird vorgeschlagen, dass der Auslösering in die Verriegelungsstellung vorgespannt ist. Wird der Auslösering durch Betätigung eines Benutzers von der Verriegelungsstellung in die Freigabestellung überführt, um einen in den Aufnahmeraum eingeführten Kloben für eine Entnahme aus der Klobenaufnahme freizugeben, so kehrt der Auslösering nach der Betätigung, d.h. wenn der Benutzer den Auslösering wieder losgelassen hat, automatisch in die Verriegelungsstellung zurück. Insbesondere ist dann die Klobenaufnahme bereits wieder für das nächste Einführen des Klobens bereit.

Ein besonders einfacher Aufbau der Halterung wird erreicht, wenn die radial rückfedernd ausgebildeten Hintergreifungsnasen (55) oder hieran ausgebildete Federelemente (51) dergestalt mit den Ablenkstegen (43) oder sich hieran anschließenden Stegabschnitten zusammenwirken, dass der Auslösering (15) in die Verriegelungsstellung vorgespannt ist. Somit ist der Auslösering ohne zusätzliche, separate Verspannmittel in die Verriegelungsstellung vorgespannt.

Der Auslösering ist auch dann im erfindungsgemäßen Sinne als in die Verriegelungsstellung vorgespannt anzusehen, wenn in der Verriegelungsstellung selbst überhaupt keine Kraft bzw. kein Drehmoment mehr auf den Auslösering ausgeübt wird.

Der Auslösering muss nicht ausschließlich in die Verriegelungsstellung vorgespannt sein. Es ist stattdessen auch möglich, den Auslösering nach dem Prinzip eines Kippschalters auszubilden, so dass der Benutzer den Auslösering also unter Überwindung eines Totpunktes wahlweise in die Verriegelungsstellung oder in die Freigabestellung dreht.

Ferner können die Eingriffsfenster bezüglich der Längsachse der Aufnahmeschale in einer regelmäßigen Teilung vorgesehen sein und/oder die Verriegelungsabschnitte sind bezüglich einer Längsachse des Klobens in einer regelmäßigen Teilung vorgesehen, d.h. die Aufnahmeschale bzw. der Kloben ist hinsichtlich der Eingriffsfenster bzw. der Verriegelungsabschnitte bezüglich eines bestimmten Teilungswinkels rotationssymmetrisch ausgebildet. Dadurch existieren mehrere frei wählbare Winkelstellungen, in denen der Kloben in den Aufnahmeraum eingeführt und gesichert werden kann. Somit kann das betreffende Zubehörteil wahlweise in verschiedenen vorbestimmten Winkelstellungen am Zweirad befestigt werden. Beispielsweise können die Eingriffsfenster und/oder die Verriegelungsabschnitte in einer regelmäßigen Teilung von 90° angeordnet sein, die sich hinsichtlich Funktionalität und Bedienerfreundlichkeit als besonders geeignet herausgestellt hat.

Des Weiteren kann ein Betätigungsabschnitt des Auslöserings an seiner Außenfläche eine Profilierung oder Riffelung aufweisen, um eine Rutschsicherung bei einer Betätigung des Auslöserings bereitzustellen. Durch die Profilierung oder Riffelung kann der Auslösering besser gegriffen werden.

Ein besonders einfacher und kompakter Aufbau des Auslöserings ergibt sich, wenn ein Betätigungsabschnitt des Auslöserings, die Hintergreifungsnasen und ggf. ein oder mehrere Federelemente des Auslöserings einstückig ausgebildet sind. Ein derartig ausgebildeter Auslösering kann besonders kostengünstig hergestellt und auf einfache Weise mit einer Aufnahmeschale zu einer Klobenaufnahme zusammengesetzt werden.

Insbesondere kann der Kloben, die Aufnahmeschale und/oder der Auslösering aus Kunststoff, d.h. einem kostengünstigen Material, gefertigt sein.

Nach einer besonderen Ausgestaltung der Erfindung kann ein Vorspannmittel, insbesondere eine Druckfeder, vorgesehen sein, das bei in den Aufnahmeraum eingeführtem Kloben in im Wesentlichen axialer Richtung vorgespannt ist. Das Vorspannmittel kann entweder an dem Kloben oder der Klobenaufnahme vorgesehen sein. Das Vorspannmittel wirkt beim Einführen des Klobens in die Klobenaufnahme der Einführbewegung entgegen und ist in der Verriegelungsstellung der Halterung bei in den Aufnahmeraum eingeführtem Kloben mit Druck vorgespannt. Bei einer Drehung des Auslöserings aus der Verriegelungsstellung in die Freigabestellung wird die Entnahmebewegung des Klobens aus der Klobenaufnahme heraus durch den Druck des Vorspannmittels unterstützt.

Die Erfindung betrifft weiterhin ein Schloss mit einer Halterung der erläuterten Art.

Nicht beschränkende Ausführungsbeispiele der Erfindung sind in der Zeichnung dargestellt und werden nachfolgend beschrieben. Es zeigen:
- Fig. 1a und 1b: verschiedene Explosionsansichten einer erfindungsgemäßen Halterung mit einem Kloben, einer Aufnahmeschale und einem Auslösering,
- Fig. 2a bis 2c: eine Perspektivansicht, eine Unteransicht und eine Seitenansicht des Klobens der Halterung von Fig. 1,
- Fig. 3a bis 3c: eine Perspektivansicht, eine weitere Perspektivansicht und eine Unteransicht der Aufnahmeschale der Halterung von Fig. 1,
- Fig. 4a bis 4c: eine Perspektivansicht, eine weitere Perspektivansicht und eine Draufsicht des Auslöserings der Halterung von Fig. 1,
- Fig. 5a und 5b: eine Unteransicht und eine Draufsicht der Aufnahmeschale und des Auslöserings von Fig. 1 in einem zur Ausbildung einer Klobenaufnahme zusammengesetzten Zustand, und
- Fig. 6a und 6b: verschiedene Perspektivansichten der Halterung von Fig. 1, wobei der Kloben in einen Aufnahmeraum der Klobenaufnahme von Fig. 5 eingeführt ist.

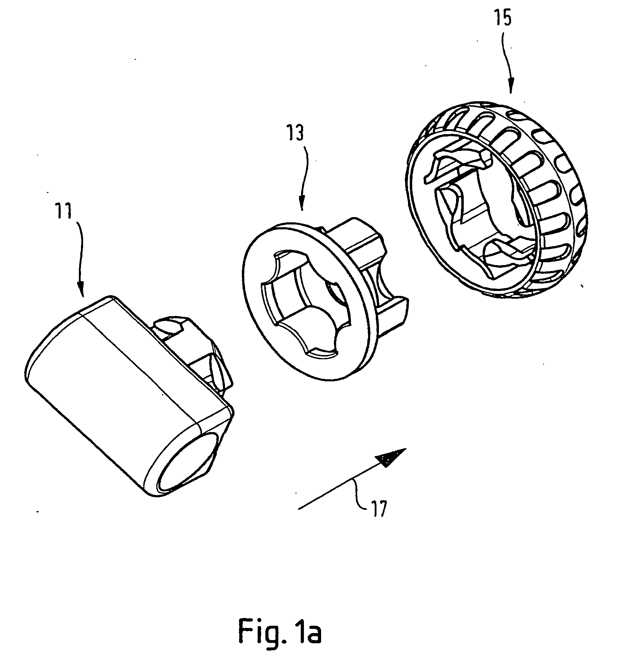

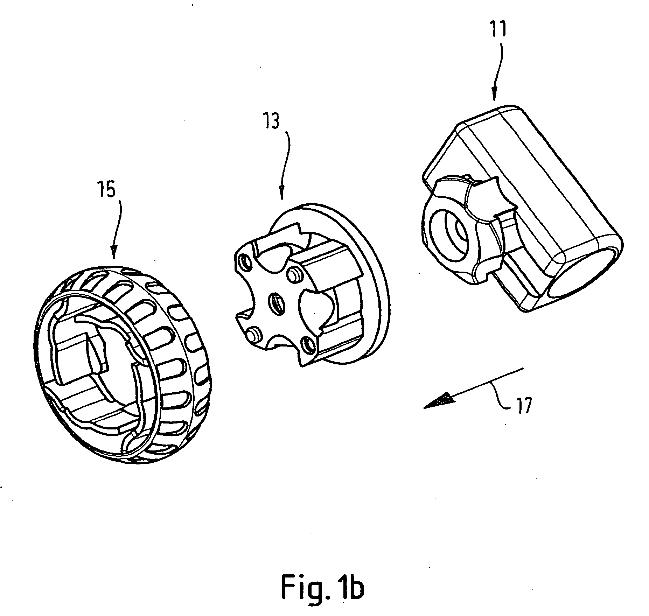

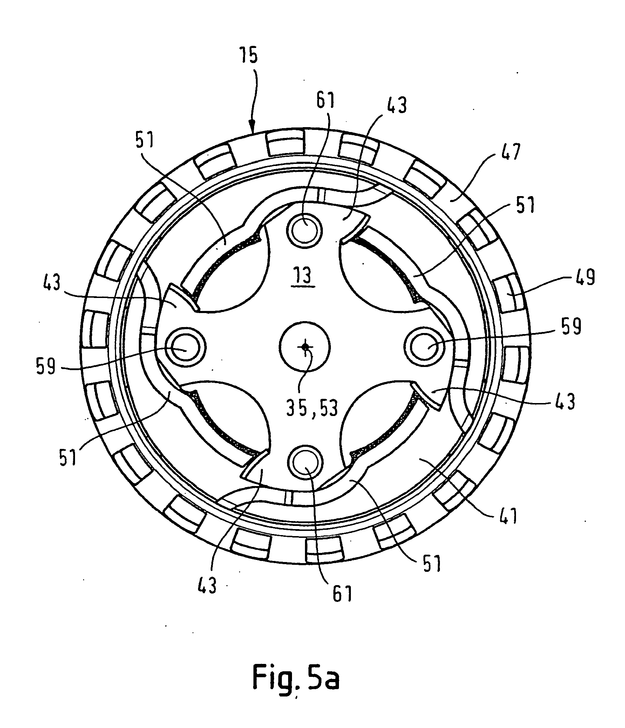

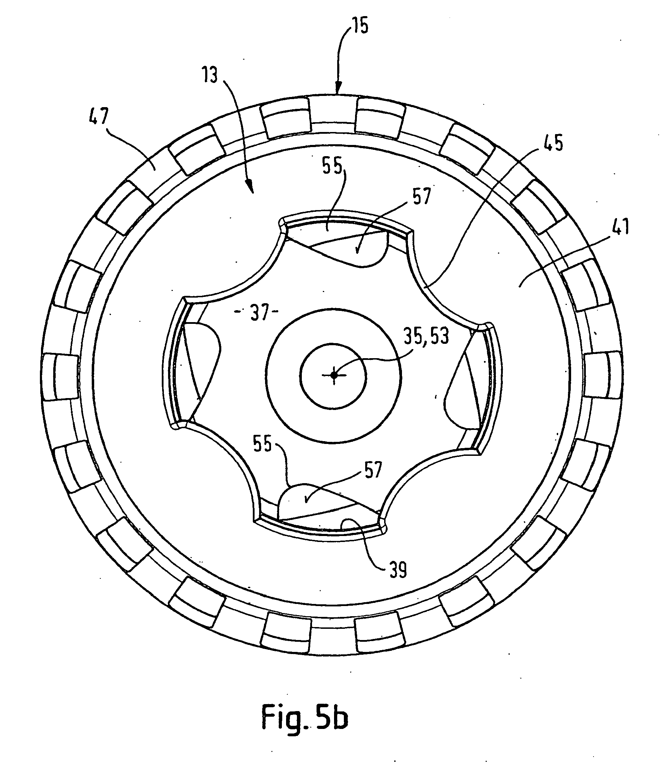

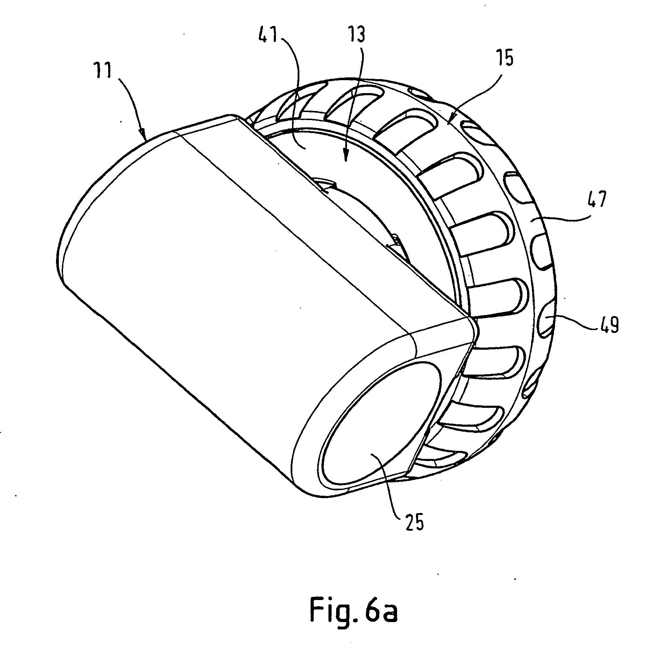

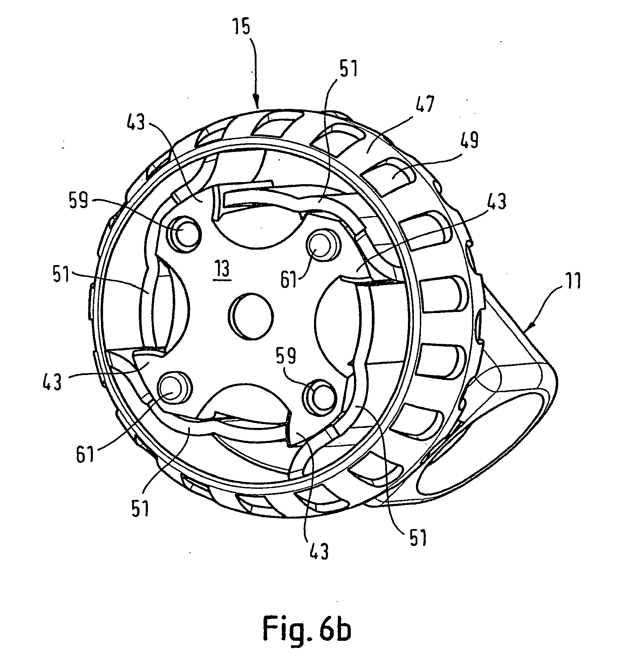

Die Fig. 1a und 1b zeigen eine erfindungsgemäße Halterung zur Befestigung eines Zubehörteils an einem Zweirad mit einem Kloben 11, an dem beispielsweise ein Bügel oder ein Drahtseil eines Fahrradschlosses befestigbar ist, und einer Klobenaufnahme 13, 15, die beispielsweise mittels eines nicht dargestellten Winkelstücks an den Rahmen eines Fahrrads montierbar ist. Die Klobenaufnahme umfasst eine Aufnahmeschale 13 und einen Auslösering 15, die in den Fig. 1a und 1b getrennt gezeigt sind. In den Fig. 5a, 5b, 6a und 6b sind diese beiden Bauteile 13, 15 zu der Klobenaufnahme zusammengesetzt, wobei der Auslösering 15 die Aufnahmeschale 13 umgreift.

Für die Befestigung eines Zubehörteils an einem Fahrrad wird der Kloben 11 entlang einer Einführrichtung 17 in die zusammengesetzte Klobenaufnahme 13, 15 eingeführt. Um die Befestigung des Zubehörteils wieder zu lösen, wird der Kloben 11 entgegen der Einführrichtung 17 aus der Klobenaufnahme 13, 15 entnommen. Der Kloben 11, die Aufnahmeschale 13 und der Auslösering 15 sind als Spritzgussteile aus Kunststoff gefertigt. Für vergleichsweise schwere Zubehörteile können zumindest der Kloben 11 und die Aufnahmeschale 13 auch aus Zinkdruckguss oder Aluminiumguss gefertigt sein.

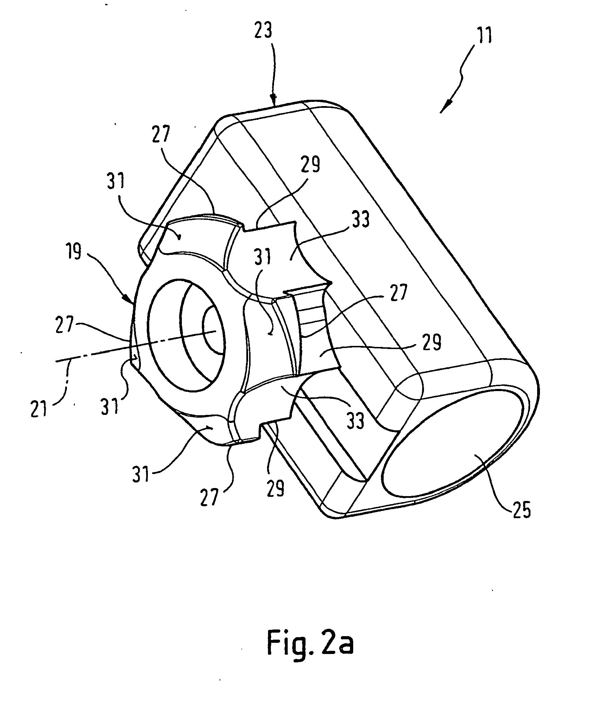

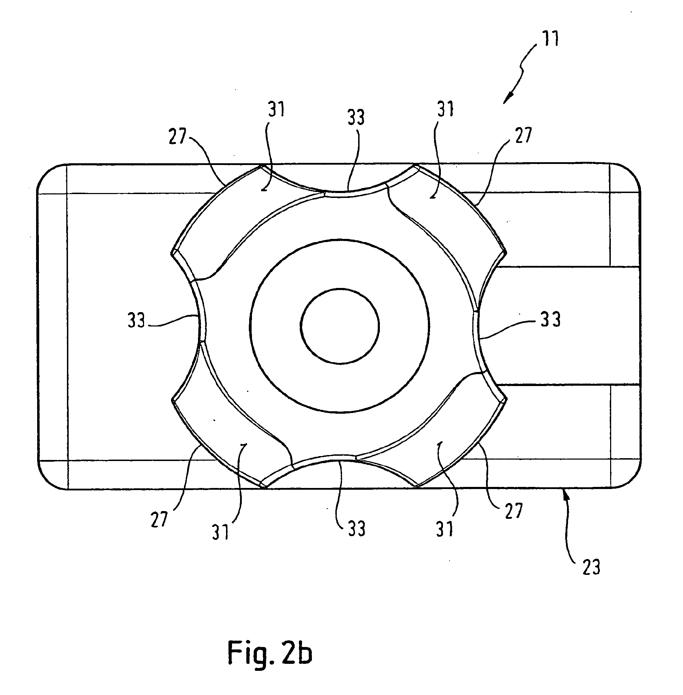

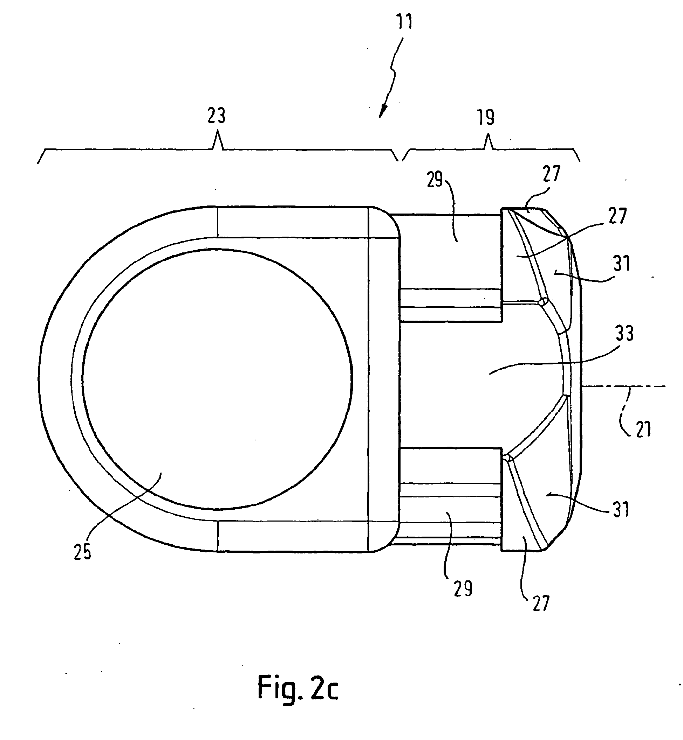

Wie insbesondere aus den Fig. 2a bis 2c ersichtlich ist, umfasst der Kloben 11 einen eine zylindrische Grundform aufweisenden Klobenschaft 19 mit einer Längsachse 21 und einen beispielsweise langgestreckten Klobenfortsatz 23, dessen Längserstreckung senkrecht zu der Längsachse 21 des Klobenschafts 19 verläuft. Der Klobenfortsatz 23 weist entlang seiner Längserstreckung einen im Querschnitt gesehen kreisrunden Durchgang 25 auf, der zur Befestigung des Zubehörteils vorgesehen ist.

Der Klobenschaft 19 weist an seinem dem Klobenfortsatz 23 abgewandten Ende vier radial abgesetzte, nach außen vorstehende Verriegelungsabschnitte 27 auf, so dass zwischen den Verriegelungsabschnitten 27 und dem Klobenfortsatz 23 radial zurückversetzte Hintergreifungsabschnitte 29 ausgebildet sind. Die Verriegelungsabschnitte 27 weisen Kontaktflächen 31 auf, die gegenüber einer senkrecht zur Längsachse 21 des Klobenschafts 19 orientierten Ebene geneigt sind, um beim Einführen des Klobens 11 in die Klobenaufnahme 13, 15 als Ablenkschrägen zu dienen.

Darüber hinaus weist der Klobenschaft 19 vier Führungsabschnitte 33 auf, die sich über die gesamte Länge des Klobenschafts 19 parallel zur Längsachse 21 des Klobenschafts 19 erstrecken. Die Führungsabschnitte 33 sind als konkav gewölbte Ausnehmungen 33 in der Außenfläche des Klobenschafts 19 ausgebildet. Die Verriegelungsabschnitte 27 und die Führungsabschnitte 33 des Klobens 11 sind jeweils bezüglich der Längsachse 21 des Klobenschafts 19 in einer regelmäßigen Teilung von 90° angeordnet. Die Führungsabschnitte 33 sind dabei jeweils zwischen zwei Verriegelungsabschnitten 27 angeordnet.

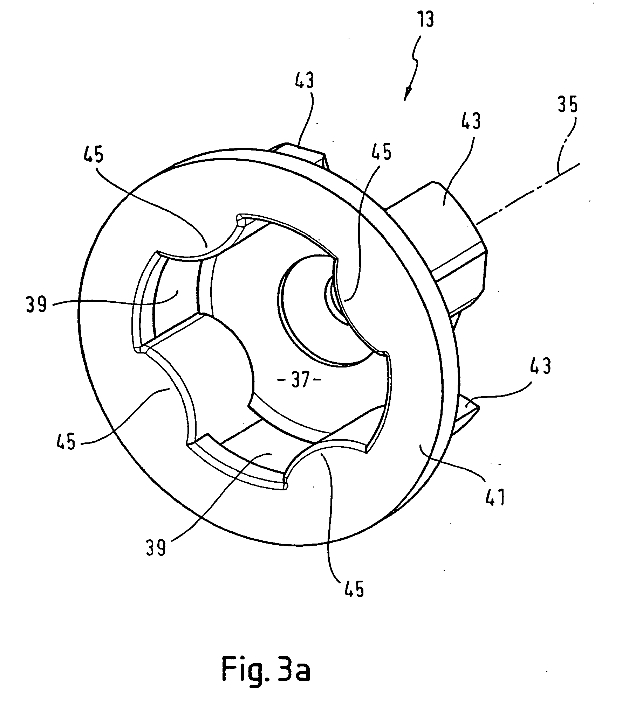

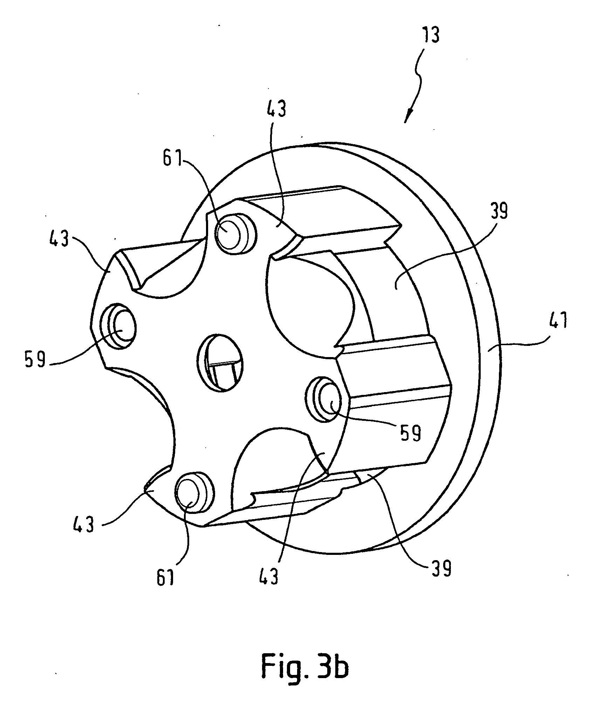

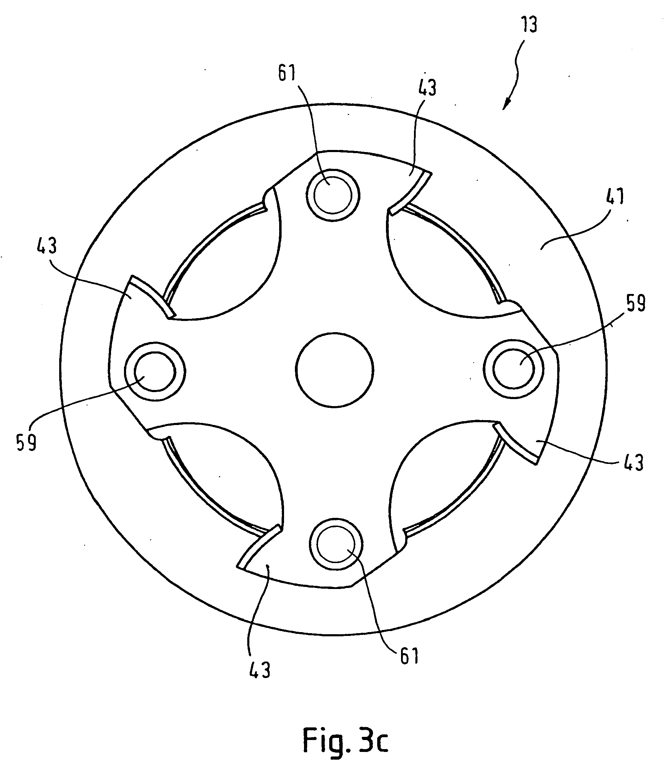

Die Fig. 3a bis 3c zeigen die Aufnahmeschale 13. Diese besitzt eine topfförmige Grundform mit einer Längsachse 35, wobei die Aufnahmeschale 13 einen Aufnahmeraum 37 zum Einführen des Klobens 11 begrenzt und vier seitliche Eingriffsfenster 39 umfasst. Die topfförmige Aufnahmeschale 13 wird an ihrem offenen Ende durch einen senkrecht zu der Längsachse 35 des Aufnahmeschale 13 orientierten Ringkragen 41 abgeschlossen.

Die Aufnahmeschale 13 weist weiterhin vier parallel zu der Längsachse 35 der Aufnahmeschale 13 verlaufende Ablenkstege 43 auf, die mit den Eingriffsfenstern 39 alternierend in Umfangsrichtung der Aufnahmeschale 13 angeordnet sind und zum formschlüssigen Zusammenwirken mit den Führungsabschnitten 33 des Klobenschafts 19 ausgelegt sind. Die Ablenkstege 43 weisen hierfür in Richtung der Längsachse 35 der Aufnahmeschale 13 ragende, konvex gewölbte Vorsprünge 45 auf. Die Eingriffsfenster 39 und die Ablenkstege 43 der Aufnahmeschale 13 sind dabei jeweils bezüglich der Längsachse 35 der Aufnahmeschale 13 in einer regelmäßigen Teilung von 90° angeordnet.

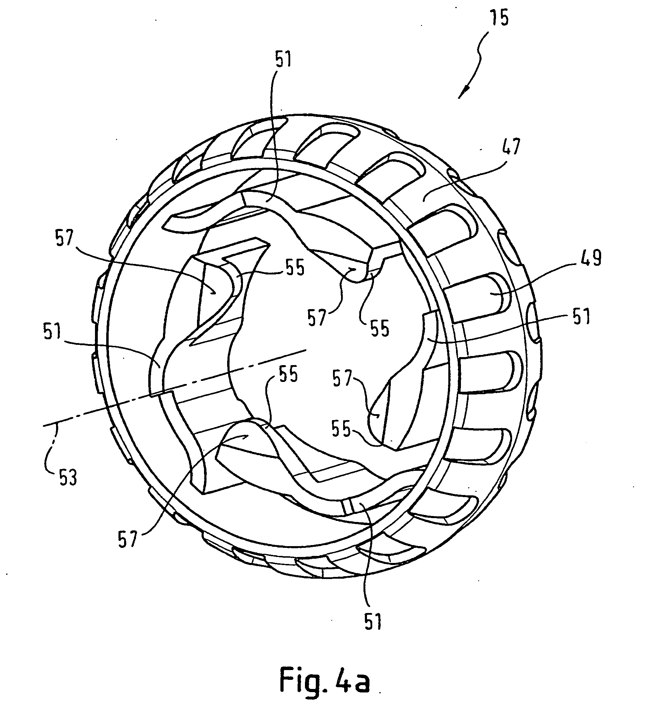

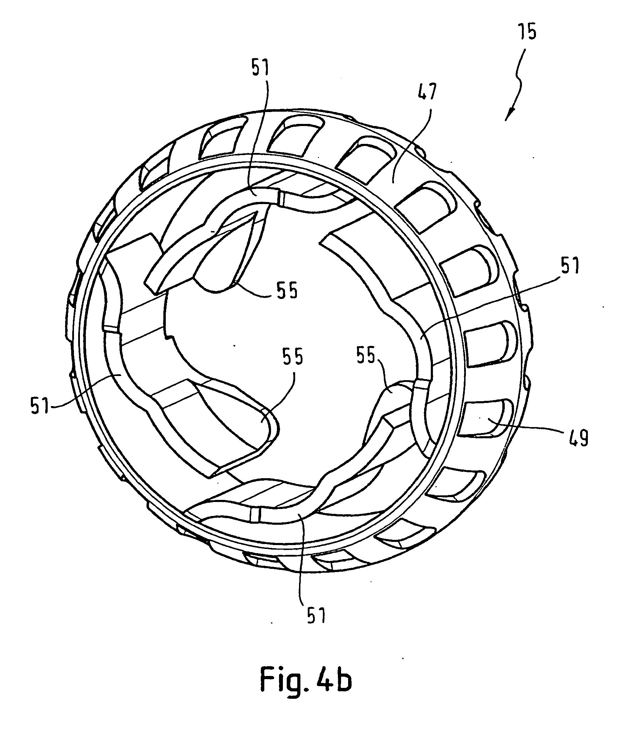

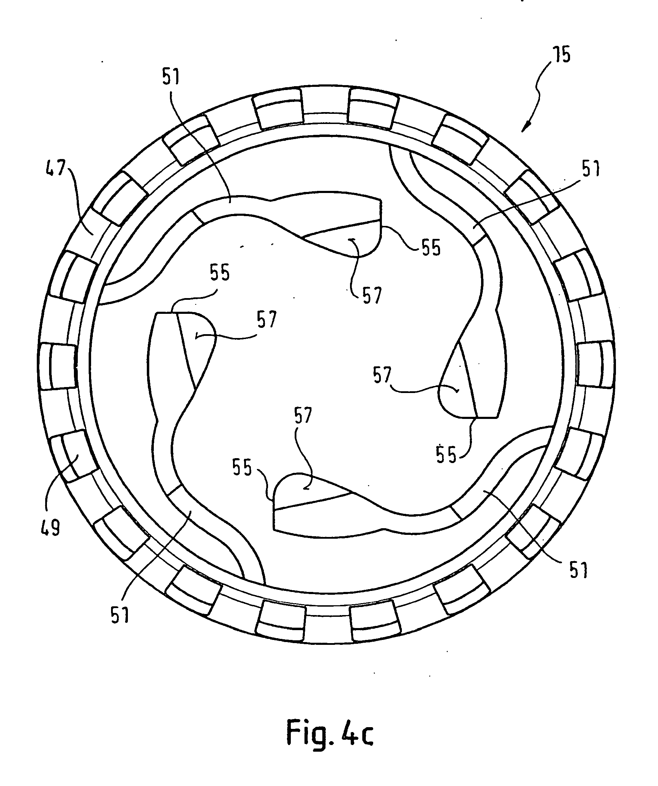

Der Auslösering 15 der erfindungsgemäßen Halterung ist insbesondere in den Fig. 4a bis 4c gezeigt. Der Auslösering 15 umfasst einen ringförmigen Betätigungsabschnitt 47, der an seiner Außenfläche eine Profilierung in Form von regelmäßig angeordneten Vertiefungen 49 aufweist. Von dem Betätigungsabschnitt 47 stehen nach innen vier S-förmig ausgebildete Balkenfedern 51 ab, an denen senkrecht zur Drehachse 53 des Auslöserings 15 orientierte Hintergreifungsnasen 55 ausgebildet sind. Die Balkenfedern 51 und die Hintergreifungsnasen 55 sind jeweils bezüglich der Drehsachse des Auslöserings 15 in einer regelmäßigen Teilung von 90° angeordnet.

Die Balkenfedern 51 sind radial nach außen auslenkbar, so dass die Hintergreifungsnasen 55 bezüglich der Drehachse 53 des Auslöserads 15 radial rückfedernd ausgebildet sind. Darüber hinaus weisen die Hintergreifungsnasen 55 Kontaktflächen 57 auf, die gegenüber einer senkrecht zur Drehachse 53 des Auslöserads 15 orientierten Ebene geneigt sind und beim Einführen des Klobens 11 in die Klobenaufnahme 13, 15 als Ablenkschrägen dienen. Der Betätigungsabschnitt 47, die Balkenfedern 53 und die Hintergreifungsnasen 55 sind einstückig ausgebildet.

Zum Zusammensetzen der Klobenaufnahme 13, 15 wird die Aufnahmeschale 13 mit ihrem Boden voran in den Auslösering 15 eingesetzt, wobei die Balkenfedern 51 und die Hintergreifungsnasen 55 des Auslöserings 15 durch den Boden und die Ablenkstege 43 der Aufnahmeschale 13 zunächst radial nach außen gedrängt werden und dann bei eingesetzter Aufnahmeschale 13 radial in Richtung der Längsachse 35 der Aufnahmeschale 13 zurückfedern, so dass die Hintergreifungsnasen 55 des Auslöserings 15 durch die Eingriffsfenster 39 der Aufnahmeschale 13 in den Aufnahmeraum 37 der Aufnahmeschale 13 eingreifen. Der Auslösering 15 befindet sich dabei in einer ersten Funktionsstellung, nämlich der Verriegelungsstellung. Im zusammengesetzten Zustand der Klobenaufnahme 13, 15 wird die Aufnahmeschale 13 von dem Auslösering 15 vollständig umgriffen, und die Längsachse 35 der Aufnahmeschale 13 fällt mit der Drehachse 53 des Auslöserings 15 zusammen, wie in Fig. 5a und 5b gezeigt ist.

Die Befestigung der Klobenaufnahme 13, 15 an dem Fahrrad kann - wie bereits erwähnt - mittels eines Winkelstücks erfolgen. Für diese Befestigung sind an der Unterseite des Bodens der Aufnahmeschale 13 beispielsweise zwei Bohrungen 59 vorgesehen. Ferner sind zwei Stabilisierungsstifte 61 ausgebildet, die eine zusätzliche Stabilisierung gegenüber unerwünschten Drehbewegungen bewirken können.

Nachfolgend wird das Einführen des gezeigten Klobens 11 in die Klobenaufnahme 13, 15 und das Entnehmen des Klobens 11 aus der Klobenauf nahme 13, 15 beschrieben.

Zunächst wird der Kloben 11 in eine Winkelstellung gebracht, die das Einführen des Klobens 11 in den Aufnahmeraum 37 der Klobenaufnahme 13, 15 erlaubt. Der Kloben 11 wird dabei derart ausgerichtet, dass die Vorsprünge 45 der Ablenkstege 43 in die Ausnehmungen 33 des Klobens 11 eingreifen. Die Ablenkstege 43 der Aufnahmeschale 13, 15 wirken somit als Positionierhilfe beim Einführen des Klobens 11. Da der Kloben 11 und die Klobenaufnahme 13, 15 jeweils in einer regelmäßigen Teilung von 90° vorgesehen sind, sind vier verschiedene Winkelstellungen möglich.

Beim Einführen des Klobens 11 in die Klobenaufnahme 13, 15 entlang der Einführrichtung 17 befindet sich der Auslösering 15 in der genannten Verriegelungsstellung, in der die Hintergreifungsnasen 55 des Auslöserings 15 durch die Eingriffsfenster 39 in den Aufnahmeraum 37 der Aufnahmeschale 13 eingreifen. Die abgeschrägten Kontaktflächen 31 der Verriegelungsabschnitte 27 des Klobens 11 wirken beim Einführen des Klobens 11 mit den abgeschrägten Kontaktflächen 57 der Hintergreifungsnasen 55 des Auslöserings 15 derart zusammen, dass die Hintergreifungsnasen 55 vorübergehend radial nach außen gedrückt werden, so dass die Verriegelungsabschnitte 27 und die Hintergreifungsnasen 55 aneinander vorbei gleiten können.

Sobald die Verriegelungsabschnitte 27 die Hintergreifungsnasen 55 passiert haben, federn die Hintergreifungsnasen 55 bezüglich der Längsachse der Aufnahmeschale 13 radial zurück und greifen in die Hintergreifungsabschnitte 29 des Klobens 11 ein. Die Hintergreifungsnasen 55 hintergreifen dabei die Verriegelungsabschnitte 27 des Klobens 11, so dass der Kloben 11 wirksam an der Klobenaufnahme 13, 15 verriegelt ist und folglich nicht aus der Klobenaufnahme 13, 15 entnommen werden kann. Die Verriegelungsabschnitte 27 des Klobens 11 sind somit durch das Einführen des Klobens 11 in den Aufnahmeraum 37 der Klobenaufnahme 13, 15 an den Hintergreifungsnasen 55 des Auslöserings 15 verrastbar. Der derart in der Klobenaufnahme 13, 15 gesicherte Kloben 11 ist in den Fig. 6a und 6b gezeigt. Die Ablenkstege 43, die in die Ausnehmungen 33 eingreifen, bilden eine Drehsicherung gegen eine Drehung des Klobens 11 in der Klobenaufnahme 13, 15.

Das Einführen des Klobens 11 in die Klobenaufnahme 13, 15 ist somit sehr einfach, da keine Handhabe eigens betätigt werden muss.

Um den Kloben 11 aus der Klobenaufnahme 13, 15 wieder entnehmen zu können, wird der Auslösering 15 relativ zu der Aufnahmeschale 13 um die Längsachse 35 von der Verriegelungsstellung in eine weitere Funktionsstellung, nämlich in die Freigabestellung gedreht. Der Kloben 11 und die Klobenaufnahme 13, 15 wirken derart zusammen, dass aufgrund der Drehung des Auslöserings 15 die Hintergreifungsnasen 55 aus dem Aufnahmeraum 37 zurückgezogen werden. Hierfür werden bei der Drehung des Auslöserings 15 die Hintergreifungsnasen 55 durch die Ablenkstege 43 radial nach außen abgelenkt. Der Kloben 11 kann somit wieder aus der Klobenaufnahme 13, 15 entnommen werden.

Mit der radialen Ablenkung der Hintergreifungsnasen 55 geht eine Auslenkung der Balkenfedern 51 einher, so dass mit der Drehung des Auslöserings 15 aus der Verriegelungstellung in die Freigabestellung eine Federspannung aufgebaut wird, durch die der Auslösering 15 in der Freigabestellung und in Zwischenstellungen, die zwischen der Verriegelungsstellung und der Freigabestellung liegen, in die Verriegelungsstellung vorgespannt ist. Der Auslösering 15 kehrt nach Loslassen durch den Benutzer somit automatisch in die Verriegelungsstellung zurück. Hierfür greifen die Balkenfedern 51 an den radial außen gelegenen Rückseiten der Ablenkstege 43 an. Ein separates Verspannmittel ist somit nicht erforderlich.

Die verschiedenen Bestandteile der vorstehend beschriebenen Ausführungsform der erfindungsgemäßen Halterung weisen jeweils eine regelmäßige Teilung von 90° auf. Grundsätzlich ist aber auch jede beliebige andere Teilung möglich. Ferner ist anzumerken, dass die erfindungsgemäße Halterung auch für die Befestigung von Zubehörteilen an Motorrädern geeignet ist.

Schließlich ist noch anzumerken, dass der Klobenfortsatz 23 des Klobens 11 auch derart ausgebildet sein kann, dass die erläuterte Halterung an bereits bestehenden Schlössern oder anderen Zubehörteilen nachgerüstet werden kann. Zu diesem Zweck kann der Klobenfortsatz 23 beispielsweise als eine längs geschlitzte Klemme mit variablem Durchmesser ausgebildet sein. Selbstverständlich ist es auch möglich, den Kloben 11 bzw. den Klobenschaft 19 direkt in einen Schlosskörper oder ein sonstiges Zubehörteil zu integrieren.

### Bezugszeichenliste

- 11: Kloben
- 13: Aufnahmeschale
- 15: Auslösering
- 17: Einführrichtung
- 19: Klobenschaft
- 21: Längsachse
- 23: Klobenfortsatz
- 25: Durchgang
- 27: Verriegelungsabschnitt
- 29: Hintergreifungsabschnitt
- 31: Kontaktfläche
- 33: Führungsabschnitt
- 35: Längsachse
- 37: Aufnahmeraum
- 39: Eingriffsfenster
- 41: Ringkragen
- 43: Ablenksteg
- 45: Vorsprung
- 47: Betätigungsabschnitt
- 49: Vertiefung
- 51: Bälkenfeder
- 53: Drehachse
- 55: Hintergreifungsnase
- 57: Kontaktfläche
- 59: Bohrung
- 61: Stabilisierungsstift

## Patentansprüche

1. Halterung zur Befestigung eines Zubehörteils, insbesondere eines Schlosses, an einem Zweirad,
mit einem Kloben (11) und einer Klobenaufnahme (13, 15), wobei die Klobenaufnahme (13, 15) eine Aufnahmeschale (13) aufweist, die einen Aufnahmeraum (37) zum Einführen des Klobens (11) begrenzt und die mehrere Eingriffsfenster (39) aufweist,
wobei die Klobenaufnahme (13, 15) ferner einen Auslösering (15) aufweist, der die Aufnahmeschale (13) umgreift und um eine Längsachse (35) der Aufnahmeschale (13) zwischen einer Verriegelungsstellung und einer Freigabestellung relativ zu der Aufnahmeschale (13) drehbar ist, wobei der Auslösering (15) mehrere Hintergreifungsnasen (55) aufweist,
wobei der Kloben (11) entlang der Längsachse (35) der Aufnahmeschale (13) in den Aufnahmeraum (37) der Aufnahmeschale (13) einführbar ist,
wobei der Kloben (11) mehrere radial abgesetzte Verriegelungsabschnitte (27) aufweist, und
wobei der Kloben (11) und die Klobenaufnahme (13, 15) dergestalt zusammenwirken, dass, wenn der Kloben (11) in den Aufnahmeraum (37) eingeführt ist,
- die Hintergreifungsnasen (55) des Auslöserings (15) durch die Eingriffsfenster (39) der Aufnahmeschale (13) in den Aufnahmeraum (37) eingreifen und die Verriegelungsabschnitte (27) des Klobens (11) hintergreifen, um den Kloben (11) an der Klobenaufnahme (13, 15) zu verriegeln, falls sich der Auslösering (15) in der Verriegelungsstellung befindet, und
- die Hintergreifungsnasen (55) aus dem Aufnahmeraum (37) zurückgezogen sind, um den Kloben (11) für eine Entnahme aus der Klobenaufnahme (13, 15) freizugeben, falls sich der Auslösering (15) in der Freigabestellung befindet.

2. Halterung nach Anspruch 1,
**dadurch gekennzeichnet,**
**dass** der Auslösering (15) und die Aufnahmeschale (13) dergestalt zusammenwirken, dass die Hintergreifungsnasen (55) durch eine Drehung des Auslöserings (15) aus der Verriegelungsstellung in die Freigabestellung aus dem Aufnahmeraum (37) zurückziehbar sind.

3. Halterung nach Anspruch 2,
**dadurch gekennzeichnet,**
**dass** die Aufnahmeschale (13) mehrere Ablenkstege (43) aufweist, die mit den Eingriffsfenstern (39) alternierend in Umfangsrichtung der Aufnahmeschale (13) angeordnet sind, um das Zurückziehen der Hintergreifungsnasen (55) zu bewirken.

4. Halterung nach Anspruch 3,
**dadurch gekennzeichnet,**
**dass** die Ablenkstege (43) der Aufnahmeschale (13) zusätzlich als Drehsicherung gegen eine Drehung des Klobens (11) in der Klobenaufnahme (13, 15) ausgebildet sind.

5. Halterung nach Anspruch 3 oder 4,
**dadurch gekennzeichnet,**
**dass** die Ablenkstege (43) parallel zu der Längsachse (35) der Aufnahmeschale (13) verlaufen.

6. Halterung nach einem der Ansprüche 3 bis 5,
**dadurch gekennzeichnet,**
**dass** die Ablenkstege (43) der Aufnahmeschale (13) zum Zusammenwirken mit Führungsabschnitten (33) des Klobens (11) in Richtung der Längsachse (35) der Aufnahmeschale (13) ragende Vorsprünge (45) aufweisen.

7. Halterung nach Anspruch 6,
**dadurch gekennzeichnet,**
**dass** die Vorsprünge (45) der Ablenkstege (43) und die Führungsabschnitte (33) des Klobens (11) formschlüssig zueinander ausgebildet sind.

8. Halterung nach einem der vorhergehenden Ansprüche,
**dadurch gekennzeichnet,**
**dass** durch das Einführen des Klobens (11) in den Aufnahmeraum (37) der Aufnahmeschale (13) die Verriegelungsabschnitte (27) des Klobens (11) an den Hintergreifungsnasen (55) des Auslöserings (15) verrastbar sind.

9. Halterung nach einem der vorhergehenden Ansprüche,
**dadurch gekennzeichnet,**
**dass** die Hintergreifungsnasen (55) des Auslöserings (15) bezüglich der Längsachse (35) der Aufnahmeschale (13) radial rückfedernd ausgebildet sind.

10. Halterung nach Anspruch 9,
**dadurch gekennzeichnet,**
**dass** die Verriegelungsabschnitte (27) des Klobens (11) und/oder die Hintergreifungsnasen (55) des Auslöserings (15) als Ablenkschrägen dienende Kontaktflächen (31, 57) aufweisen, um das radiale Rückfedern der Hintergreifungsnasen (55) zu bewirken.

11. Halterung nach Anspruch 9 oder 10,
**dadurch gekennzeichnet,**
**dass** die Hintergreifungsnasen (55) an Federelementen (51), insbesondere S-förmigen Balkenfedern, ausgebildet sind.

12. Halterung nach einem der vorhergehenden Ansprüche,
**dadurch gekennzeichnet,**
**dass** der Auslösering (15) in die Verriegelungsstellung vorgespannt ist.

13. Halterung nach einem der Ansprüche 9 bis 11,
**dadurch gekennzeichnet,**
**dass** die radial rückfedernd ausgebildeten Hintergreifungsnasen (55) oder hieran ausgebildete Federelemente (51) dergestalt mit den Ablenkstegen (43) oder sich hieran anschließenden Stegabschnitten zusammenwirken, dass der Auslösering (15) in die Verriegelungsstellung vorgespannt ist.

14. Halterung nach einem der vorhergehenden Ansprüche,
**dadurch gekennzeichnet,**
**dass** die Eingriffsfenster (39) bezüglich der Längsachse (35) der Aufnahmeschale (13) in einer regelmäßigen Teilung vorgesehen sind,
und / oder
**dass** die Verriegelungsabschnitte (27) bezüglich einer Längsachse (21) des Klobens (11) in einer regelmäßigen Teilung vorgesehen sind.

15. Halterung nach einem der vorhergehenden Ansprüche,
**dadurch gekennzeichnet,**
**dass** ein Betätigungsabschnitt (47) des Auslöserings (15) an seiner Außenfläche eine Profilierung oder Riffelung aufweist.

16. Halterung nach einem der vorhergehenden Ansprüche,
**dadurch gekennzeichnet,**
**dass** ein Betätigungsabschnitt (47) des Auslöserings (15), die Hintergreifungsnasen (55) und vorzugsweise auch wenigstens ein Federelement (51) des Auslöserings (15) einstückig ausgebildet sind.

17. Halterung nach einem der vorhergehenden Ansprüche,
**dadurch gekennzeichnet,**
**dass** der Kloben (11), die Aufnahmeschale (13) und/oder der Auslösering (15) aus Kunststoff oder Metallguss gefertigt ist.

18. Halterung nach einem der vorhergehenden Ansprüche,
**dadurch gekennzeichnet,**
**dass** ein Vorspannmittel, insbesondere eine Druckfeder, vorgesehen ist, das bei in die Klobenaufnahme (13, 15) eingeführtem Kloben (11) in im Wesentlichen axialer Richtung vorgespannt ist.

19. Schloss mit einer Halterung nach einem der vorhergehenden Ansprüche.

## Claims

1. A holder for the fastening of an accessory part, in particular a lock, to a two-wheeler,
having a block (11) and a block receiver (13, 15),
wherein the block receiver (13, 15) has a reception shell (13) which bounds a reception space (37) for the introduction of the block (11) and which has a plurality of engagement windows (39);
wherein the block receiver (13, 15) furthermore has a triggering ring (15) which engages around the reception shell (13) and is rotatable relative to the reception shell (13) about a longitudinal axis (35) of the reception shell (13) between a latching position and a release position, with the triggering ring (15) having a plurality of engagement noses (55);
wherein the block (11) can be introduced along the longitudinal axis (35) of the reception shell (13) into the reception space (37) of the reception shell (13);
wherein the block (11) has a plurality of radially offset latching sections (27); and
wherein the block (11) and the block receiver (13, 15) cooperate such that when the block (11) is introduced into the reception space (37),
- the engagement noses (55) of the triggering ring (15) engage through the engagement windows (39) of the reception shell (13) into the reception space (37) and engage behind the latching sections (27) of the block (11) to latch the block (11) to the block receiver (13, 15) if the triggering ring (15) is located in the latching position; and
- the engagement noses (55) are withdrawn from the reception space (37) to release the block (11) for a removal from the block receiver (13, 15) if the triggering ring (15) is located in the release position.

2. A holder in accordance with claim 1, **characterised in that** the triggering ring (15) and the reception shell (13) cooperate such that the engagement noses (55) can be withdrawn from the reception space (37) by a rotation of the triggering ring (15) out of the latching position into the release position.

3. A holder in accordance with claim 2, **characterised in that** the reception shell (13) has a plurality of deflection webs (43) which are arranged alternatingly with the engagement windows (39) in the peripheral direction of the reception shell (13) to effect the withdrawal of the engagement noses (55).

4. A holder in accordance with claim 3, **characterised in that** the deflection webs (43) of the reception shell (13) are additionally designed as a rotational security against a rotation of the block (11) in the block receiver (13, 15).

5. A holder in accordance with claim 3 or claim 4, **characterised in that** the deflection webs (43) extend parallel to the longitudinal axis (35) of the reception shell (13).

6. A holder in accordance with any one of the claims 3 to 5, **characterised in that** the deflection webs (43) of the reception shell (13) have protrusions (43) projecting in the direction of the longitudinal axis (35) of the reception shell (13) for cooperation with guide sections (33) of the block (11).

7. A holder in accordance with claim 6, **characterised in that** the protrusions (45) of the deflection webs (43) and the guide sections (33) of the block (11) are designed in form-fitted manner with one another.

8. A holder in accordance with any one of the preceding claims, **characterised in that** the latching sections (27) of the block (11) can be latched to the engagement noses (55) of the triggering ring (15) by the introduction of the block (11) into the reception space (37) of the reception shell (13).

9. A holder in accordance with any one of the preceding claims, **characterised in that** the engagement noses (55) of the triggering ring (15) are designed as radially resilient with respect to the longitudinal axis (35) of the reception shell (13).

10. A holder in accordance with claim 9, **characterised in that** the latching sections (27) of the block (11) and/or the engagement noses (55) of the triggering ring (15) have contact surfaces (31, 57) serving as deflection slopes to effect the radial resilience of the engagement noses (55).

11. A holder in accordance with claim 9 or claim 10, **characterised in that** the engagement noses (55) are formed at spring elements (51), in particular S-shaped bar springs.

12. A holder in accordance with any one of the preceding claims, **characterised in that** the triggering ring (15) is biased into the latching position.

13. A holder in accordance with any one of the claims 9 to 11, **characterised in that** the engagement noses (55) designed as radially resilient or spring elements (51) formed thereat cooperate with the deflection webs (43) or with web sections adjoining them such that the triggering ring (15) is biased into the latching position.

14. A holder in accordance with any one of the preceding claims, **characterised in that** the engagement windows (39) are provided in a regular division with respect to the longitudinal axis (35) of the reception shell (13); and/or **in that** the latching sections (27) are provided in a regular division with respect to a longitudinal axis (21) of the block (11).

15. A holder in accordance with any one of the preceding claims, **characterised in that** an actuation section (47) of the triggering ring (15) has a profiled section or grooving at its outer surface.

16. A holder in accordance with any one of the preceding claims, **characterised in that** an actuation section (47) of the triggering ring (15), the engagement noses (55) and preferably also at least one spring element (51) of the triggering ring (15) are formed in one piece.

17. A holder in accordance with any one of the preceding claims, **characterised in that** the block (11), the reception shell (13) and/or the triggering ring (15) is/are produced from plastic or cast metal.

18. A holder in accordance with any one of the preceding claims, **characterised in that** a bias means, in particular a compression spring, is provided which is biased substantially in the axial direction with a block (11) introduced into the block receiver (13, 15).

19. A lock having a holder in accordance with any one of the preceding claims.

## Revendications

1. Monture pour la fixation d'un accessoire, en particulier d'un cadenas, sur un deux-roues,
qui comprend un bloc (11) et un logement de bloc (13, 15),
dans laquelle le logement de bloc (13, 15) comprend une coque de logement (13) qui délimite une chambre de logement (37) pour l'introduction du bloc (11) et qui comporte plusieurs fenêtres d'engagement (39),
le logement de bloc (13, 15) comprend en outre une bague de déclenchement (15) qui entoure la coque de logement (13) et qui est susceptible de tourner par rapport à la coque de logement (13) autour d'un axe longitudinal (15) de la coque de logement (13) entre une position de verrouillage et une position de libération, ladite bague de déclenchement (15) comprenant plusieurs ergots (55) assurant un crochetage postérieur,
le bloc (11) est susceptible d'être introduit dans la chambre de logement (37) de la coque de logement (13) le long de l'axe longitudinal (35) de la coque de logement (13),
le bloc (11) comprend plusieurs tronçons de verrouillage (27) en retrait radial, et
le bloc (11) et le logement de bloc (13, 15) coopèrent de telle manière que, quand le bloc (11) est introduit dans la chambre de logement (37),
- si la bague de déclenchement (15) se trouve dans la position de verrouillage, les ergots de crochetage (55) de la bague de déclenchement (15) s'engagent dans la chambre de logement (37) à travers les fenêtres d'engagement (39) de la coque de logement (13) et engagent les tronçons de verrouillage (27) du bloc (11) par l'arrière, afin de verrouiller le bloc (11) dans le logement de bloc (13, 15), et
- si la bague de déclenchement (15) se trouve dans la position de libération, les ergots de crochetage (55) sont rétractés hors de la chambre de logement (37), afin de libérer le bloc (11) pour un enlèvement hors du logement de bloc (13, 15).

2. Monture selon la revendication 1,
**caractérisée en ce que** la bague de déclenchement (15) et la coque de logement (13) coopèrent de telle manière que les ergots de crochetage (55) sont susceptibles d'être rétractés hors de la position de verrouillage jusque dans la position de libération à l'extérieur de la chambre de logement (37) par une rotation de la bague de déclenchement (15).

3. Monture selon la revendication 2,
**caractérisée en ce que** la coque de logement (13) comprend plusieurs barrettes de déflexion (43) qui sont agencées en alternance avec les fenêtres d'engagement (39) dans la direction périphérique de la coque de logement (13) pour provoquer la rétraction des ergots de crochetage (55).

4. Monture selon la revendication 3,
**caractérisée en ce que** les barrettes de déflexion (43) de la coque de logement (13) sont réalisées en supplément en guise de blocage antirotation à l'encontre d'une rotation du bloc (11) dans le logement de bloc (13, 15).

5. Monture selon la revendication 3 ou 4,
**caractérisée en ce que** les barrettes de déflexion (43) s'étendent parallèlement à l'axe longitudinal (35) de la coque de logement (13).

6. Monture selon l'une des revendications 3 à 5,
**caractérisée en ce que** les barrettes de déflexion (43) de la coque de logement (13) comprennent des saillies (45) qui dépassent en direction de l'axe longitudinal (35) de la coque de logement (13) pour la coopération avec des tronçons de guidage (33) du bloc (11).

7. Monture selon la revendication 6,
**caractérisée en ce que** les saillies (45) des barrettes de déflexion (43) et les tronçons de guidage (33) du bloc (11) sont réalisés en vue d'une coopération de formes mutuelle.

8. Monture selon l'une des revendications précédentes,
**caractérisée en ce que**, par introduction du bloc (11) dans la chambre de logement (37) de la coque de logement (13), les tronçons de verrouillage (27) du bloc (11) sont susceptibles d'être enclenchés au niveau des ergots de crochetage (55) de la bague de déclenchement (15).

9. Monture selon l'une des revendications précédentes,
**caractérisée en ce que** les ergots de crochetage (55) de la bague de déclenchement (15) sont réalisés avec effet de rappel élastique radial par rapport à l'axe longitudinal (35) de la coque de logement (13).

10. Monture selon la revendication 9,
**caractérisée en ce que** les tronçons de verrouillage (27) du bloc (11) et/ou les ergots de crochetage (55) de la bague de déclenchement (15) comprennent des surfaces de contact (31, 57) servant de pentes de déflexion, pour provoquer le rappel élastique radial des ergots de crochetage (55).

11. Monture selon la revendication 9 ou 10,
**caractérisée en ce que** les ergots de crochetage (55) sont réalisés sur des éléments à ressort (51), en particulier des ressorts-barreaux en forme de S.

12. Monture selon l'une des revendications précédentes,
**caractérisée en ce que** la bague de déclenchement (15) est précontrainte dans la position de verrouillage.

13. Monture selon l'une des revendications 9 à 11,
**caractérisée en ce que** les ergots de crochetage (55) réalisés avec effet de rappel élastique radial, ou des éléments à ressort (51) réalisés sur ces ergots, coopèrent avec les barrettes de déflexion (43) ou avec des tronçons de barrettes qui s'y raccordent, de telle façon que la bague de déclenchement (15) est précontrainte dans la position de verrouillage.

14. Monture selon l'une des revendications précédentes,
**caractérisée en ce que** les fenêtres d'engagement (39) sont prévues à un pas régulier par rapport à l'axe longitudinal (35) de la coque de logement (13), et/ou
**en ce que** les tronçons de verrouillage (27) sont prévus à un pas régulier par rapport à un axe longitudinal (21) du bloc (11).

15. Monture selon l'une des revendications précédentes,
**caractérisée en ce qu'**un tronçon d'actionnement (47) de la bague de déclenchement (15) comporte un profilage ou des stries sur sa surface extérieure.

16. Monture selon l'une des revendications précédentes,
**caractérisée en ce qu'**un tronçon d'actionnement (47) de la bague de déclenchement (15), les ergots de crochetage (55), et de préférence également au moins un élément à ressort (51) de la bague de déclenchement (15), sont réalisés d'une seule pièce.

17. Monture selon l'une des revendications précédentes,
**caractérisée en ce que** le bloc (11), la coque de logement (13) et/ou la bague de déclenchement (15) est réalisé(e) en matière plastique ou en fonte métallique.

18. Monture selon l'une des revendications précédentes,
**caractérisée en ce qu'**il est prévu un organe de précontrainte, en particulier un ressort de compression, qui est précontraint essentiellement direction axiale lorsque le bloc (11) est introduit dans le logement de bloc (13, 15).

19. Cadenas comprenant une monture selon l'une des revendications précédentes.
